# EUROPEAN PATENT SPECIFICATION

(11) **EP 2 193 068 B1**
(45) Date of publication and mention of the grant of the patent: **27.01.2016**
(21) Application number: 09778044.9
(22) Date of filing: 21.08.2009
(51) Int. Cl.: B62M 1/24

(54) **DRIVE MECHANISM FOR A VEHICLE PROPELLABLE BY MUSCLE POWER AND VEHICLE**
FAHRZEUG UND DESSEN MUSKELGETRIEBENER ANTRIEBSMECHANISMUS
MÉCANISME D'ENTRAÎNEMENT POUR VÉHICULE EN MESURE D'ÊTRE PROPULSÉ PAR UNE FORCE MUSCULAIRE, ET VÉHICULE

(30) Priority: 01.09.2008 EP 08015415
(43) Date of publication of application: 09.06.2010
(73) Proprietor: Streetstepper GmbH, 73614 Schorndorf (DE)
(72) Inventor: BUCHBERGER, Martin, A-6080 Innsbruck-Vill (AT)
(74) Representative: Dilg, Haeusler, Schindelmann Patentanwaltsgesellschaft mbH
(86) International application number: PCT/EP2009/006095
(87) International publication number: WO 2010/022903

(56) References cited:
- EP-A- 1 849 695
- EP-A- 1 954 555
- WO-A-2007/133681
- WO-A1-2007/043035
- AU-B2- 634 520
- US-A- 907 562
- US-A1- 2006 046 884
- US-B1- 6 419 251

## Description

### FIEND OF THE INVENTION

The invention relates to a drive mechanism for a vehicle propellable by muscle power, in particular a step scooter and to a step scoter.

### BACKGROUND OF THE INVENTION

Exemplary embodiments of vehicles propelled by muscle power, which are driven by the driver by a first tread surface, which is movable via a tread surface stroke and which also comprise a steering device, are identified as pedal mobile, scooter, see-saw scooter or lever-propelled bicycle, for example. As a rule, such vehicles are equipped with one, but in particular with two such tread surfaces, for example in the form of levers, which are preferably alternately moved by the driver, in particular by using a treading motion. Oftentimes, the tread surface is supported so as to be pivotable about an axis in a certain angle. However, exemplary embodiments are also known in which the tread surface is not supported so as to be pivotable in a certain angle, but where the angle between tread surface and direction of motion of the vehicle changes little or not at all. With such embodiments, the tread surface is mostly moved forwards and backwards or upward and downward or combined forwards and backwards as well as upward and downward.

After a tread surface motion has taken place in one direction and after the tread surface was subsequently released again, the first tread surface is mostly moved back into its initial position by using a spring device. However, exemplary embodiments with two tread surfaces are also known, where the return of the tread surfaces into the initial position takes place via a coupling by an alternating load on the two tread surfaces. This coupling of the two tread surfaces can take place, for example, by using mechanical or hydraulic elements, tackle or chain hoists or by fixing the two tread surfaces to a see-saw.

With such scooters, the transmission of the tread surface path into covered vehicle distance takes place via one first driving element for each tread surface, for example. As a rule, this first driving element is designed as a preferably flexible and elongation-proof pulling element and is guided with a non-positive or positive fit via a so-called drive shaft, which is coupled to the driving wheel via a freewheeling mechanism (or a non-return device). This coupling between each of the drive shaft assigned to a tread surface and the driving wheel by using a freewheeling mechanism is in each case required for the vehicle to be capable of continuing to move during the return stroke of the tread surfaces - and thus during the return motion of the respective first driving element - in an unhindered manner. It goes without saying that it is also possible to design this coupling not only via a freewheeling mechanism in each case, but also via additional mechanical parts, such as for example gear wheels, chains, belts or also via a gear shift - for example a gear hub.

WO 2007/043035 A1 discloses a propelling mechanism for a scooter. The propelling mechanism comprises two independent foot-rests, each connected to one end of a respective chain passing around an overrunning clutch. The other end of each chain is connected via a spring to the frame of the scooter. Thus, the cycle of each independent part of the propelling mechanism is defined by a first half cycle in which the respective foot-rest is pressed down by the user and straining the respective spring. While the second half cycle is defined by drawing up the foot-rest again by means of the spring in case the user releases the foot-rest of his/her weight. WO 2007/043035 A1 discloses a driving element for each foot-rest, however it does not disclose a returning element which is simultaneously coupled to the foot-rest and which causes the driving element to rotate in a direction opposite to that of the footrest.

Published German Patent Application DE 43 19 104 A1 shows an exemplary embodiment of a lever drive, where the transmission within the tread surface stroke changes. This is attained in that the first driving element is guided about a cam disk in the form of a spiral, which is coupled to a drive disk via a freewheel. The course of the transmission results from the course of the ratio of the effective radii between cam disk and drive disk. The cam disk performs an oscillatory motion during the vehicle operation which must be slowed down and accelerated anew in response to each change of the direction of rotation.

For enabling the oscillating motion and for returning the cam disk back into its initial position after a stroke of the treat surface a force is needed. This force is applied by a spiral spring which is fixed to the cam disk and which is tensioned during the treating and which returns the cam disk. However, such a spiral spring is a further complex element and may be prone to failure and may brake during operation leading to a failure of the whole scooter which is useless for further operation.

### SUMMARY OF THE INVENTION

There may be a need to create a drive mechanism for a driving shaft, in particular a cam disk of a driving shaft, of a drive mechanism of a vehicle which may be less complex and less prone to failure.

This need may be fulfilled by a drive mechanism with the features according to the independent patent claim. Advantageous embodiments result from the dependent claims.

According to an exemplary aspect of the invention a drive mechanism for a vehicle propellable by muscle power is provided, wherein the drive mechanism comprises a first actuating element which is moveable by a stroke along a movement path, a first driving element, a first gearing comprising a driving shaft, and first returning element, wherein the first driving element is coupled between the first actuating element and the driving shaft in such a way that the actuating element stroke induces a movement of the driving shaft in a first direction, and wherein the returning element is coupled between the first actuating element and the driving shaft in such a way that it induces a movement of the driving shaft in a second direction opposite to the first direction.

In particular, the first driving element may be a chain, a flexible band, cord, cable, rope or the like. In particular, the actuating element may be a tread, a lever or an arm. It may be possible, for example, to guide the first driving element via the drive shaft with a non-positive or positive fit and to connect it to the first actuating element. In particular, the first driving element and the returning element may be a single element, i.e. may be formed by a single chain, cord or cable, which perform both functionalities.

According to an exemplary aspect of the invention a vehicle propellable by muscle power, in particular a step scooter, is provided, wherein the vehicle comprises a drive mechanism according to an exemplary aspect of the invention, a frame, a first driving wheel connected rotatable to the frame, and a transmission element coupled between the drive mechanism and the first driving wheel. In particular, the vehicle may further comprise a gearshift or gear changing, which is adapted to be used to change the transmission ratio between the drive mechanism or gearing mechanism and the driving wheel. Such a gearshift may be formed by a common gearshift as it is used by bicycles.

In particular, actuating element may be clamped by a first spring device. Such a spring device may furthermore serve the purpose of returning the actuating element back into its initial position after the stroke has taken place. It may thus be possible, with designs of such a vehicle propelled by muscle power with two actuating elements, to design the two actuating elements so as not to be coupled. However, couplings of the actuating elements by additional mechanical or hydraulic elements may be possible.

It should be noted that the first actuating element, the first driving element, and the first returning element may form a closed loop. That is, the first actuating element, the first driving element, and the first returning element may independently from other elements, e.g. a second actuating element, a second driving element, and/or a second returning element, be suitable to enable a periodic movement or cyclic movement of the drive mechanism. In particular, the first actuating element, the first driving element, and the first returning element may be arranged on one side of the vehicle propellable by muscle power with respect to the movement direction of the vehicle. For example the first actuating element, the first driving element, and the first returning element may be arranged all on the left side and no further elements may be necessary on the right side of the vehicle to enable a cyclic motion or movement of the first actuating element. In particular, no cord, chain, cable or the like leading from the left or right side to the right or left side of the vehicle may be necessary.

By providing a first returning element which is coupled to the first actuating element it may be possible to create a return mechanism for a driving shaft, which may comprise a cam disk, of a drive mechanism of a vehicle which may be less complex and less prone to failure, since no additional spring elements or the like has to be implemented. The return mechanism acting on the driving shaft may be actuated by the same mechanism which is used for returning the actuating element, e.g. by a spring fixable to the frame of the vehicle and the actuating element. The returning element may be wound around the first gearing, e.g. may be guided into a groove or channel in the first gearing, during the actuating or moving of the first actuating element.

Next, further exemplary embodiments of the invention will be described. In the following, further exemplary embodiments of the drive mechanism will be explained. However, these embodiments also apply for the vehicle.

According to another exemplary embodiment of the drive mechanism the driving shaft is a shaft having a variable effective radius. In particular, the driving shaft may comprise a cam disk. The cam disk may be coupled to the driving shaft via a freewheel mechanism. The driving shaft or the cam disk of the driving shaft may have a variable radius so that a variable effective radius may easily be achievable providing a variable transmission ratio in an effective way. However, the cam disk may have a constant radius, i.e. a radius which does not change during a revolution of the cam disk, so that it may be possible to guide the driving element during a plurality of revolutions in a collision-free manner over the cam disk.

According to another exemplary embodiment of the drive mechanism the first driving element and the returning element are fixed at the first actuating element, and the first driving element leads to a first direction from the first actuating element and the first returning element leads to a second direction from the first actuating element.

In particular, the first and the second direction may lead to opposite directions with respect to the first actuating element. That is, the first direction may be upward with respect to the first actuating element while the second direction may be downward with respect to the first actuating element, or vice versa. By leading the first driving element and the first returning element into different directions with respect to the first actuating element an effective manner may be provided to return the drive shaft or the cam disk of the drive shaft into its initial position.

According to another exemplary embodiment the drive mechanism further comprises a reverting element arranged in such a way that the moving direction of the returning element is reverted. In particular, the reverting element may be a deflection roller.

According to another exemplary embodiment of the drive mechanism the returning element comprises at least one element out of the group consisting of a chain, a flexible band, a cord, a cable, a wire, and a tightrope. In general every flexible element is suitable which is able to transmit a tractive force or traction force. Such returning elements are all suitable, effective returning elements which may be less complex than a spiral spring or the like.

According to another exemplary embodiment of the drive mechanism the first returning element further comprises a spring. In particular, the spring may be arranged in such a way that it compensates for path length variations during movement of the returning element. For example, during the movement of the actuating element it may come to moving path differences between the moving of the driving element wound around a cam disk having a variable radius and the moving of the returning element. These path length differences may be compensated by a spring in an efficient manner.

According to another exemplary embodiment of the drive mechanism the first driving element and the first returning element are formed by a single element. In particular, the single element may be an element which is adapted to transfer force in two opposite directions. For example, a chain may be used which engages into a toothed ring which may be coupled to the driving shaft. Another possibility would be to use a rope, flexible band, cord cable the like which is wound in more than one turn around the drive shaft, e.g. cam disk of the drive shaft, so that a sufficient transfer of forces is possible.

According to another exemplary embodiment the drive mechanism further comprises a second actuating element which is moveable by a stroke along a second movement path, a second driving element, and a second returning element, wherein the second driving element is coupled between the second actuating element and the driving shaft in such a way that stroke of the second actuating element induces a movement of the driving shaft in the first direction, and wherein the second returning element is coupled between the second actuating element and the driving shaft in such a way that it induces a movement of the driving shaft in the second direction opposite to the first direction.

That is, the drive mechanism may comprise two sub driving mechanisms which are adapted to actuate the driving shaft. In particular, the driving shaft may comprise a second cam disk, wherein the first actuating element actuates the first cam disk while the second actuating element actuates the second cam disk via the first driving element and the second driving element, respectively. The two sub driving mechanism may be independently from each other. In general the two sub driving mechanisms are identical to each other, i.e. the second sub driving mechanism may also comprise a reverting element.

Next, further exemplary embodiments of the vehicle will be explained. However, these embodiments also apply for the drive mechanism.

According to another exemplary embodiment the vehicle further comprises a reverting element attached to the frame in such a way that the moving direction of the first returning element is reverted.

According to another exemplary embodiment the vehicle the reverting element is attached fixedly to the frame. That is, the reverting element may have a stationary position with respect to the frame. According to another exemplary embodiment of the vehicle the reverting element is moveably fixed to the frame. In particular, the reverting element may be fixed to the frame by a spring. Thus, the reverting element may have a slightly variable position with respect to the frame. The reverting element may be the same reverting element as described above in the context of the driving mechanism, i.e. it may be the reverting element used to revert the moving direction of the returning element.

According to another exemplary embodiment of the vehicle the movement path of the actuating element comprises a lower point, wherein the reverting element is arranged below the lower point. That is, the reverting element may be arranged lower or nearer to a surface the vehicle is moved on than the lower point of the movement path of the actuating element.

According to another exemplary embodiment of the vehicle the transmission element is coupled to the first wheel free of a freewheel mechanism. That is, the coupling between the transmission element and the first wheel or first driving wheel, e.g. a shaft of the wheel, does not include a freewheel mechanism but is implemented in a way that a force transmission is possible in both direction. Thus, the transmission element may be driven by the wheel in case the drive mechanism exerts no force on the cam disk and consequently on the transmission element.

As already mentioned in the context of the drive mechanism the vehicle may comprise a drive mechanism having two sub driving mechanisms which may be coupled to each other or may be independent of each other. In that case one sub driving mechanism may be arranged on the left side with respect to the movement direction of the vehicle while the other one may be arranged on the right side with respect to the movement direction of the vehicle. Thus, one sub driving mechanism may be actuated by the left leg of a user while the other one may be actuated by the right leg of the user. Both sub driving mechanism may have identical elements but may be arranged mirrored to each other with respect to a longitudinal axis of the vehicle. Therefore, each sub driving mechanism may comprise an actuating element which is moveable by a stroke along a movement path, a driving element, a gearing comprising a driving shaft, and a returning element. Optional both sub driving mechanisms may comprise a reverting element to revert the movement direction of the respective returning element. Furthermore, both sub driving mechanisms may be coupled to the same driving shaft by different cam disks. The above described elements may form a primary actuating mechanism for the vehicle while a secondary actuating mechanism of the vehicle may be formed by a transmission element connecting or coupling the drive mechanism with the wheel of the vehicle. This secondary actuating mechanism may be formed by a single transmission element and may optionally comprise a gearshift in order to enable different transmission ratios.

The primary actuating mechanism may be similar to the one disclosed in WO 2007/062841. However, WO 2007/062841 does not disclose a returning element coupled between the actuating element and the driving shaft, for example. In one exemplary embodiment the primary actuating mechanism may comprise a drive shaft and at least one driving element, wherein the drive shaft, along its axial direction, has at least one first region and a second region with radii which differ from one another or which are variable, wherein the driving element, along a length of the driving element, has at least one first partial section and a second partial section, wherein a cross section of the first partial section is different to a cross section of the second partial section, and wherein the drive shaft and the driving element are adapted to one another in such a manger that the first partial section can be guided via the first region and the second partial section can be guided via the second region in response to a motion of the driving element.

### BRIEF DESCRIPTION OF THE DRAWING

The invention will be described in more detail hereinafter with reference to examples of embodiment but to which the invention is not limited.
Fig. 1 schematically illustrates an overall view of a vehicle according to an exemplary embodiment of the invention.
Fig. 2 schematically illustrates a detailed view of a drive mechanism according to an exemplary embodiment of the invention in a first position.
Fig. 3 schematically illustrates a detailed view of the drive mechanism of Fig .2 in a second position.
Fig. 4 schematically shows a slanted view of the drive shaft with two axial regions as well as the driving element, which is guided over this drive shaft.
Figs. 5a-d schematically show four exemplary embodiments for the driving element with two axial regions, in each case in top view and sectional view.

### DESCRIPTION OF EMBODIMENTS

The illustration in the drawing is schematically. In different drawings, similar or identical elements are provided with the same reference signs.

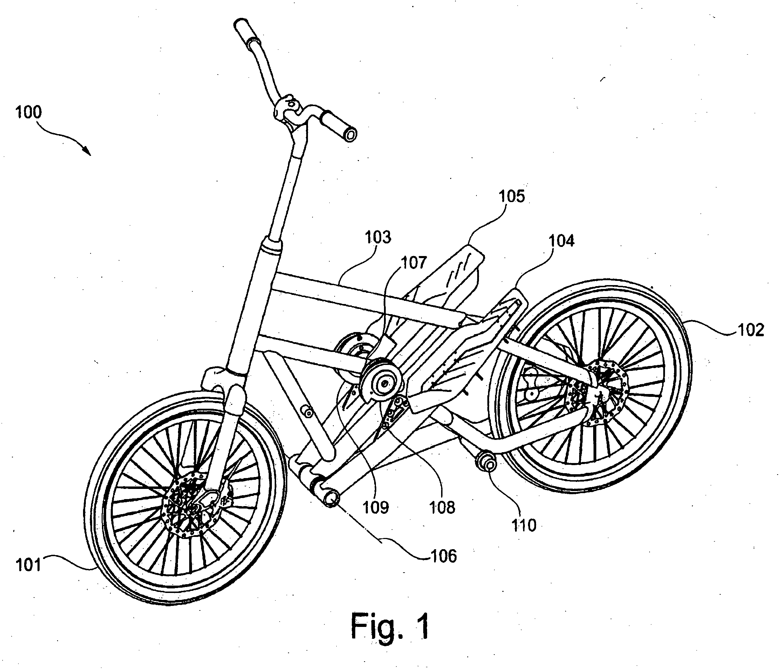

In the following, referring to Figs. 1 to 5 some basic principles of a drive mechanism and a vehicle according to exemplary embodiments will be explained.

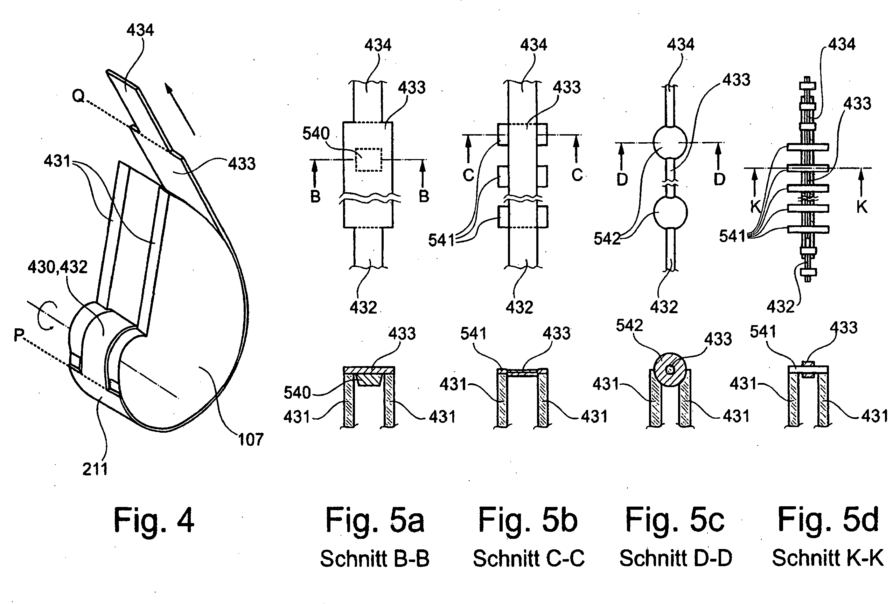

**Fig. 1** schematically illustrates an overall view of a vehicle 100 according to an exemplary embodiment of the invention. In particular, the vehicle 100 is a step scooter which comprises, beside two wheels 101 and 102, a frame 103, and a drive mechanism according to an exemplary aspect of the invention. For the sake of clarity further known elements, e.g. brakes, lights, are not depicted in Fig. 1. The drive mechanism comprises two actuating elements 104 and 105 which can be moved independently from each other around an axle schematically indicated by the dotted line 106. The actuating elements form treads or levers which can be actuated by a driver along a stroke path. Furthermore, the drive mechanism comprises two drive elements (not shown in Fig. 1 due to clarity reasons) which couple the actuating elements and a drive shaft 107 and two returning elements (also not shown for clarity reasons in Fig. 1) coupling the actuating elements and the drive shaft as well. The drive shaft 107 comprises two cam disks 108 and 109 to which the two drive elements and the two returning elements are coupled, respectively. The cam disks are shown in greater detail in Figs. 4 and 5.

Furthermore, the drive mechanism comprises two reverting elements of which only one 110 is visible in Fig. 1. The returning elements serve for reverting the moving direction of the returning element and may be formed by deflection rollers. The reverting elements are shown in Fig. 1 as stationary fixed to the frame but may also be moveably fixed to the frame, e.g. by using a spring or the like.

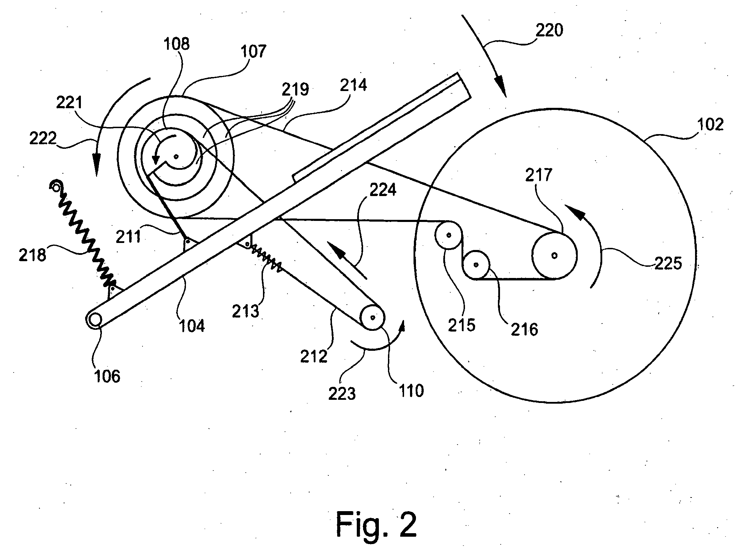

**Fig. 2** schematically illustrates a detailed side view of a drive mechanism of the vehicle of Fig. 1 according to an exemplary embodiment of the invention in a first position. In particular, Fig. 2 shows one actuating element 104 fixed to the axle 106 forming the axle of rotation of a movement of the actuating element. Further, a driving element 211 is shown in Fig. 2 formed by a chain, for example, fixed to the actuating element 104 and leading around the cam disk 108 of driving shaft 107.

Furthermore, a returning element 212 is shown in Fig. 2 fixed to the actuating element 104 and to the cam disk 108 as well but leading, in Fig. 2, to the opposite direction than the driving element 211. The movement direction of the returning element 212 is reverted by the reverting element 110 which is stationary fixed to the frame of the vehicle (not shown in Fig. 2). In order to take care of path differences during the movement of the returning element, a spring 213 is used to fix the returning element to the actuating element. Alternatively, the reverting element 110 may be moveably fixed to the frame, e.g. by a spring or rail, so that the spring 213 may be saved. Furthermore, Fig. 2 shows the driving shaft 107 and a transmission element 214, e.g. a chain, cord, cable or the like, wound around the drive shaft, e.g. engaging with a toothed ring. The transmission element leads to the wheel 102 of the vehicle and may engage with a driving shaft 217 of the wheel, e.g. via a toothed ring in case a chain is used as the transmission element. The vehicle may comprise a transmission element tensioning device which is schematically indicated by the rollers 215 and 216 which serves for a tensioning of the transmission element. For example, a chain tensioning device may be used in case a chain is used as the transmission element. However, other tensioning devices are also possible. The vehicle may comprise a common gear shift as known in the field of bicycles which gear shift is schematically indicated by the three chain rings labeled as 219. Furthermore, the gear shift may comprise a derailer. In addition a returning spring 218 is fixed between the actuating element 104 and the frame which serves for a returning of the actuating element into its initial position after a stroke is finished and the actuating element is unloaded by the driver.

It should be noted that preferably the gearing of the drive mechanism comprises a freewheel mechanism so that the cam disks 108 are at rest when the actuating elements 211 are not moved, while the drive shaft 217 of the wheel may not comprise such a freewheel mechanism so that the transmission element 214 may move even when the actuating elements 211 are not actuated. Thus, it may be possible to shift gears even when the actuating elements and thus the respective cam disks are at rest. Furthermore, it should be noted that although the driving element 211 and the returning element 212 are shown to be fixed to opposite sides of the actuating element 104, they may be fixed at the same side of the actuating element or even to the same point. However, the driving element 211 and the returning element 212 are lead away from the actuating element into opposite directions as shown in Fig. 2.

In Fig. 2 a first position of the actuating element is shown which corresponds to a downward movement of the same. This downward movement is indicated by arrow 220 and leads to a rotation of the cam disc 108 and thus to a rotation of the drive shaft 107 in a counter clockwise direction in Fig. 2, which is indicated by arrows 221 and 222, respectively. At the same time the returning element 212 is also moved in a counterclockwise direction, which is indicated by arrows 223 and 224, so that it may be wound around the cam disk, e.g. in a groove or channel of the same. The movement of the drive shaft 107 and corresponding of the transmission element 214 induces a movement of the drive wheel 102 of the vehicle, which is indicated by arrow 225, so that the whole vehicle moves.

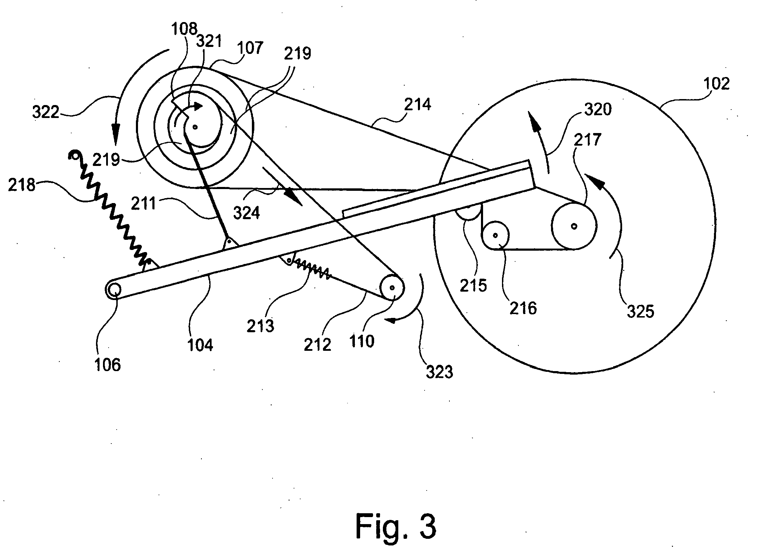

**Fig. 3** shows a second position of the actuating element of Fig. 2 which corresponds to the upward movement of the actuating element which is initiated by the returning spring 218 when the driver unloads the actuating element 104. Except of the movement direction the elements are the same in Fig. 2 and Fig. 3 so that they are not described again.

This upward movement is indicated by arrow 320. The upward movement of the actuating element leads to a movement of the returning element 212 in clockwise direction as indicated by arrows 323 and 324 so that the cam disk 108 is brought back into its initial, position as indicated by arrow 321. Due to the fact that the cam disk 108 is coupled to the drive shaft 107 via a freewheel mechanism, the drive shaft 107 may still rotate, together with the movement of the transmission element 214 and the drive shaft 217 of the wheel, in the same direction as in the position shown in Fig. 2 corresponding to the movement direction of the vehicle. The movements of the driving shafts 107 and 217 are indicated by the arrows 322 and 325, respectively.

**Fig. 4** schematically shows a slanted view of the drive shaft 107 having the form of a cam disk with two axial regions 430 and 431 as well as the driving element 211 which is guided over this drive shaft 107. It can also clearly been seen herein that the driving element.211 comprises two partial sections 432 and 433, the cross sections of which are designed in such a manner that the driving element 107 is guided in each of these partial sections via the respectively corresponding axial region 430 and 431, respectively, of the drive shaft. A third partial section 434 of the driving element illustrated in Fig. 4 is not guided via the drive shaft 107.

Four exemplary embodiments of the driving element 211 are schematically illustrated in **Figs. 5a****-d** in top view and sectional view, wherein the axial region 431 of the drive shaft 107 is in each case also depicted in the sectional views for clarification purposes. Fig. 5a shows diagrammatically a driving element 211, which is divided into three partial sections 432, 433 and 434 with different widths, wherein guide elements 540 for axially or laterally fixing the driving element 211 on the drive shaft 107 are fixed to the driving element in partial section 433.

Fig. 5b shows diagrammatically an exemplary embodiment, where the change of the cross section (in particular of the width) of the driving element in a partial section 433 takes place in widening elements 541 which are fixed to the driving element 211. In the shown exemplary embodiment, these widening elements 541 are designed in such a manner that they can simultaneously also take over the function of guide elements guiding the driving element along its movement. Fig. 5c shows schematically a diving element, which is designed as a string or a rope, for example, and which preferably comprises rotation-symmetrical elements 542, which serve as widening elements as well as guide elements, in partial in section 433. Fig. 5d shows an exemplary embodiment, in which the driving element 211 is designed as a flyer chain. However, other types of chains - for example roller chains - are also possible as designs of the driving element. In the exemplary embodiment shown in Fig. 5d, the widening of the driving element 211 in sections takes place by using different lengths of the chain rivets in sections, which take over the function of the widening elements 541 in section 433.

## Claims

1. A drive mechanism for a vehicle (100) propelled by muscle power, wherein the drive mechanism comprises:
a first actuating element (104, 105) and a second actuating element (104, 105) which are moveable by a stroke along a movement path and which are moveable around an axle (106) independently from each other;
a first driving element (211) and a second driving element;
a first gearing comprising a driving shaft (107); and
a first returning element (212), and a second returning element,
wherein the first driving element (211) is coupled between the first actuating element (104, 105) and the driving shaft (107) in such a way that the actuating element stroke induces a movement of the driving shaft (107) in a first direction (221);
wherein the second driving element is coupled between the second actuating element (104, 105) and the driving shaft (107) in such a way that stroke of the second actuating element induces a movement of the driving shaft (107) in the first direction;
wherein the first returning element (212) is coupled between the first actuating element (104, 105) and the driving shaft (107) in such a way that it induces a movement of the driving shaft (107) in a second direction (321) opposite to the first direction;
wherein the second returning element is coupled between the second actuating element (104, 105) and the driving shaft (107) in such a way that it induces a movement of the driving shaft (107) in the second direction opposite to the first direction;
wherein the first driving element (211) and the first returning element (212) are fixed to the first actuating element;
wherein the first driving element (211) leads to a first direction from the first actuating element (104) and the first returning element (212) leads to a second direction from the first actuating element (104),
wherein the second driving element and the second returning element are fixed to the second actuating element;
wherein the second driving element leads to a first direction from the second actuating element and the second returning element leads to a second direction from the second actuating element.

2. The drive mechanism according to claim 1,
wherein the driving shaft (107) is a shaft having a variable effective radius (108, 109).

3. The drive mechanism according to any one of the claims 1 to 2, further comprising:
a reverting element (110) arranged in such a way that the moving direction of the first returning element (212) is reverted.

4. The drive mechanism according to any one of the claims 1 to 3,
wherein the first returning element (212) comprises at least one element out of the group consisting of:
a chain;
a flexible band;
a cord;
a cable;
a wire;
rope; and
a tightrope.

5. The drive mechanism according to claim 4,
wherein the first returning element (212) further comprises a spring (213).

6. The drive mechanism according to any one of the claims 1 to 5,
wherein the first driving element and the first returning element are formed by a single element.

7. A vehicle (100) propellable by muscle power, comprising:
a drive mechanism according to any one of the claims 1 to 6;
a frame (103);
a first driving wheel (102) connected rotatable to the frame (103);
a transmission element (214) coupled between the drive mechanism and the first driving wheel (102).

8. The vehicle (100) according to claim 7, further comprising:
a reverting element (110) attached to the frame (103) in such a way that the moving direction of the returning element (212) is reverted.

9. The vehicle (100) according to claim 8,
wherein the reverting element (110) is attached fixedly to the frame (103).

10. The vehicle (100) according to claim 8,
wherein the reverting element (110) is moveably fixed to the frame (103).

11. The vehicle (100) according to any one of the claims 7 to 10,
wherein the movement path of the actuating element (104, 105) comprises a lower point,
wherein the reverting element (110) is arranged below the lower point.

12. The vehicle (100) according to any one of the claims 7 to 11,
wherein the transmission element (214) is coupled to the first wheel (102) free of a freewheel mechanism.

## Patentansprüche

1. Ein Antriebsmechanismus für ein Fahrzeug (100), welches mittels Muskelkraft angetrieben ist, wobei der Antriebsmechanismus aufweist:
ein erstes Betätigungselement (104, 105) und ein zweites Betätigungselement (104, 105), welche mittels eines Hubes entlang eines Bewegungspfades beweglich sind und welche unabhängig voneinander um eine Achse beweglich sind;
ein erstes Antriebselement (211) und ein zweites Antriebselement;
ein erstes Getriebe, welches eine Antriebswelle (107) aufweist; und
ein erstes Rückkehrelement (212) und ein zweites Rückkehrelement,
wobei das erste Antriebselement (211) derart zwischen das erste Betätigungselement (104, 105) und die Antriebswelle (107) gekoppelt ist, dass der Betätigungselementhub eine Bewegung der Antriebswelle (107) in eine erste Richtung (221) induziert;
wobei das zweite Antriebselement derart zwischen das zweite Betätigungselement (104, 105) und die Antriebswelle (107) gekoppelt ist, dass ein Hub des zweiten Betätigungselementes eine Bewegung der Antriebswelle (107) in die erste Richtung induziert;
wobei das erste Rückkehrelement (212) derart zwischen das erste Betätigungselement (104, 105) und die Antriebswelle (107) gekoppelt ist, dass es eine Bewegung der Antriebswelle (107) in eine zweite Richtung (321) entgegengesetzt zu der ersten Richtung induziert;
wobei das zweite Rückkehrelement derart zwischen das zweite Betätigungselement (104, 105) und die Antriebswelle (107) gekoppelt ist, dass es eine Bewegung der Antriebswelle (107) in die zweite Richtung entgegengesetzt zu der ersten Richtung induziert;
wobei das erste Antriebselement (211) und das erste Rückkehrelement (212) an dem ersten Betätigungselement befestigt sind;
wobei das erste Antriebselement (211) in eine erste Richtung von dem ersten Betätigungselement (104) führt und das erste Rückkehrelement (212) in eine zweite Richtung von dem ersten Betätigungselement (104) führt,
wobei das zweite Antriebselement und das zweite Rückkehrelement an dem zweiten Betätigungselement befestigt sind;
wobei das zweite Antriebselement in eine erste Richtung von dem zweiten Betätigungselement führt und das zweite Rückkehrelement in eine zweite Richtung von dem zweiten Betätigungselement führt.

2. Der Antriebsmechanismus gemäß Anspruch 1,
wobei die Antriebswelle (107) eine Welle ist, welche einen variablen effektiven Radius (108, 109) hat.

3. Der Antriebsmechanismus gemäß einem beliebigen der Ansprüche 1 bis 2, ferner aufweisend:
ein Umkehrelement (110), welches derart angeordnet ist, dass die Bewegungsrichtung des ersten Rückkehrelementes (212) umgekehrt ist.

4. Der Antriebsmechanismus gemäß einem beliebigen der Ansprüche 1 bis 3,
wobei das erste Rückkehrelement (212) zumindest ein Element aus der Gruppe aufweist, welche aus besteht:
einer Kette;
einem flexiblen Band;
einem Gurt;
einem Seilzug;
einem Kabel;
einem Seil; und
einem Drahtseil.

5. Der Antriebsmechanismus gemäß Anspruch 4,
wobei das erste Rückkehrelement (212) ferner eine Feder (213) aufweist.

6. Der Antriebsmechanismus gemäß einem beliebigen der Ansprüche 1 bis 5,
wobei das erste Antriebselement und das erste Rückkehrelement mittels eines einzelnen Elementes gebildet sind.

7. Ein Fahrzeug (100), welches mittels Muskelkraft angetrieben ist, aufweisend:
einen Antriebsmechanismus gemäß einem beliebigen der Ansprüche 1 bis 6;
einen Rahmen (103);
ein erstes Antriebsrad (102), welches drehbar mit dem Rahmen (103) verbunden ist;
ein Übertragungselement (214), welches zwischen den Antriebsmechanismus und das erste Antriebsrad (102) gekoppelt ist.

8. Das Fahrzeug (100) gemäß Anspruch 7, ferner aufweisend:
ein Umkehrelement (110), welches derart an dem Rahmen (103) angebracht ist, dass die Bewegungsrichtung des Rückkehrelementes (212) umgekehrt ist.

9. Das Fahrzeug (100) gemäß Anspruch 8,
wobei das Umkehrelement (110) fest an dem Rahmen (103) angebracht ist.

10. Das Fahrzeug (100) gemäß Anspruch 8,
wobei das Umkehrelement (110) beweglich an dem Rahmen (103) befestigt ist.

11. Das Fahrzeug (100) gemäß einem beliebigen der Ansprüche 7 bis 10,
wobei der Bewegungspfad des Betätigungselementes (104, 105) einen unteren Punkt aufweist,
wobei das Umkehrelement (110) unterhalb des unteren Punktes angeordnet ist.

12. Das Fahrzeug (100) gemäß einem beliebigen der Ansprüche 7 bis 11,
wobei das Übertragungselement (214) an das erste Rad (102) gekoppelt ist frei von einem Freilaufmechanismus.

## Revendications

1. Mécanisme d'entraînement pour un véhicule (100) propulsé par une puissance musculaire, dans lequel le mécanisme d'entraînement comprend :
un premier élément d'actionnement (104, 105) et un second élément d'actionnement (104, 105) qui sont mobiles par une course le long d'une voie de mouvement et qui sont mobiles autour d'un essieu (106) indépendamment l'un de l'autre ;
un premier élément d'entraînement (211) et un second élément d'entraînement ;
un premier engrenage comprenant un arbre d'entraînement (107) ; et
un premier élément de renvoi (212) et un second élément de renvoi,
dans lequel le premier élément d'entraînement (211) est couplé entre le premier élément d'actionnement (104, 105) et l'arbre d'entraînement (107) de telle manière que la course d'élément d'actionnement induit un mouvement de l'arbre d'entraînement (107) dans une première direction (221) ;
dans lequel le second élément d'entraînement est couplé entre le second élément d'actionnement (104, 105) et l'arbre d'entraînement (107) de telle manière que la course du second élément d'actionnement induit un mouvement de l'arbre d'entraînement (107) dans la première direction ;
dans lequel le premier élément de renvoi (212) est couplé entre le premier élément d'actionnement (104, 105) et l'arbre d'entraînement (107) de telle manière qu'il induit un mouvement de l'arbre d'entraînement (107) dans une seconde direction (321) opposée à la première direction ;
dans lequel le second élément de renvoi est couplé entre le second élément d'actionnement (104, 105) et l'arbre d'entraînement (107) de telle manière qu'il induit un mouvement de l'arbre d'entraînement (107) dans la seconde direction opposée à la première direction ;
dans lequel le premier élément d'entraînement (211) et le premier élément de renvoi (212) sont fixés au premier élément d'actionnement ;
dans lequel le premier élément d'entraînement (211) mène à une première direction depuis le premier élément d'actionnement (104) et le premier élément de renvoi (212) mène à une seconde direction depuis le premier élément d'actionnement (104),
dans lequel le second élément d'entraînement et le second élément de renvoi sont fixés au second élément d'actionnement ;
dans lequel le second élément d'entraînement mène à une première direction depuis le second élément d'actionnement et le second élément de renvoi mène à une seconde direction depuis le second élément d'actionnement.

2. Mécanisme d'entraînement selon la revendication 1, dans lequel l'arbre d'entraînement (107) est un arbre présentant un rayon effectif variable (108, 109).

3. Mécanisme d'entraînement selon l'une quelconque des revendications 1 à 2, comprenant en outre :
un élément d'inversement (110) agencé de telle manière que la direction mobile du premier élément de renvoi (212) est inversée.

4. Mécanisme d'entraînement selon l'une quelconque des revendications 1 à 3,
dans lequel le premier élément de renvoi (212) comprend au moins un élément hors du groupe consistant en :
une chaîne ;
une bande flexible ;
une corde ;
un câble ;
un fil ;
un cordage ; et
une corde raide.

5. Mécanisme d'entraînement selon la revendication 4, dans lequel le premier élément de renvoi (212) comprend en outre un ressort (213).

6. Mécanisme d'entraînement selon l'une quelconque des revendications 1 à 5,
dans lequel le premier élément d'entraînement et le premier élément de renvoi sont formés par un seul élément.

7. Véhicule (100) propulsable par la puissance musculaire comprenant :
un mécanisme d'entraînement selon l'une quelconque des revendications 1 à 6 ;
un cadre (103) ;
une première roue d'entraînement (102) reliée de manière rotative au cadre (103) ;
un élément de transmission (214) couplé entre le mécanisme d'entraînement et la première roue d'entraînement (102).

8. Véhicule (100) selon la revendication 7, comprenant en outre :
un élément d'inversion (110) attaché au cadre (103) de telle manière que la direction mobile de l'élément de renvoi (212) est inversée.

9. Véhicule (100) selon la revendication 8,
dans lequel l'élément d'inversion (110) est attaché fixement au cadre (103).

10. Véhicule (100) selon la revendication 8,
dans lequel l'élément d'inversion (110) est fixé de manière mobile au cadre (103).

11. Véhicule (100) selon l'une quelconque des revendications 7 à 10,
dans lequel là voie de mouvement de l'élément d'actionnement (104, 105) comprend un point inférieur,
dans lequel l'élément d'inversion (110) est agencé sous le point inférieur.

12. Véhicule (100) selon l'une quelconque des revendications 7 à 11,
dans lequel l'élément de transmission (214) est couplé à la première roue (102) sans mécanisme de roue libre.
